(19) **Europäisches Patentamt European Patent Office Office européen des brevets**

(11) **EP 1 714 338 B1**

(12) **FASCICULE DE BREVET EUROPEEN**

(45) Date de publication et mention
de la délivrance du brevet:
**09.12.2009 Bulletin 2009/50**

(51) Int Cl.:
**H01M 4/86** *(2006.01)*        **H01M 8/12** *(2006.01)*

(21) Numéro de dépôt: **04805814.3**

(22) Date de dépôt: **05.11.2004**

(86) Numéro de dépôt international:
**PCT/FR2004/050571**

(87) Numéro de publication internationale:
**WO 2005/045961 (19.05.2005 Gazette 2005/20)**

(54) **ANODE DE PILE A OXYDE SOLIDE A BASE D UN CERMET PARTICULIER    ET PILE A OXYDE SOLIDE LA COMPRENANT**

**FESTOXID-BATTERIEANODE AUF DER BASIS EINES SPEZIFISCHEN CERMET UND FESTOXIDBATTERIE DAMIT**

**SOLID OXIDE BATTERY ANODE BASED ON A SPECIFIC CERMET AND SOLID OXIDE BATTERY CONTAINING THE SAME**

(84) Etats contractants désignés:
**AT BE BG CH CY CZ DE DK EE ES FI FR GB GR HU IE IS IT LI LU MC NL PL PT RO SE SI SK TR**

(30) Priorité: **07.11.2003 FR 0350807**

(43) Date de publication de la demande:
**25.10.2006 Bulletin 2006/43**

(73) Titulaire: **Electricité de France
75382 Paris (FR)**

(72) Inventeurs:
 • **STEVENS, Philippe
  76139 KARLSRUHE (DE)**
 • **JOUBERT, Olivier
  F-44830 BRAINS (FR)**
 • **PIFFARD, Yves
  F-44240 LA CHAPELLE SUR ERDRE (FR)**
 • **BROHAN, LUC
  F-44240 LA CHAPELLE SUR ERDRE (FR)**
 • **CALDES-ROUILLON, Maria-Teresa
  F-44300 NANTES (FR)**

(74) Mandataire: **Poulin, Gérard et al
Société BREVATOME
3, rue du Docteur Lancereaux
75008 Paris (FR)**

(56) Documents cités:
**EP-A- 0 568 281       WO-A-00/64814
WO-A-02/41434       WO-A-03/004439
DE-A- 10 026 941       US-B1- 6 332 964**

EP 1 714 338 B1

**Description**

**DOMAINE TECHNIQUE**

La présente invention a trait à une anode de pile de combustible de type à oxyde solide, ladite anode étant à base d'un matériau composite comprenant une association particulière entre une céramique oxyde et un métal.

Le domaine général de l'invention est donc celui des piles à oxyde solide (ou pile SOFC) et des matériaux d'anode utilisés dans ces piles.

**ETAT DE LA TECHNIQUE ANTERIEURE**

Une pile à oxyde solide (ou pile SOFC) est un générateur électrique fonctionnant sur le principe suivant : l'oxygène est réduit à la cathode en ions $O^{2-}$, qui diffusent à haute température (à savoir une température pouvant aller de 700°C à 1000°C) au travers d'un électrolyte céramique conducteur d'ions $O^{2-}$ et isolant électronique en direction de l'anode où il réagit avec le combustible pour l'oxyder, formant de l'eau et éventuellement du dioxyde de carbone dans le cas d'une réaction avec un hydrocarbure. Cette oxydation produit également des électrons, qui vont circuler via le circuit externe vers la cathode.

La réaction à la cathode est la suivante :

$$O_2 + 4e^- \rightarrow 2O^{2-}$$

Les réactions envisageables à l'anode sont les suivantes :

$$H_2 + O^{2-} \rightarrow H_2O + 2e^-$$

$$CH_4 + 4O^{2-} \rightarrow 2H_2O + CO_2 + 8\ e^-$$

$$C_nH_{2n+2} + (3n+1)O^{2-} \rightarrow (n+1)H_2O + nCO_2 + (6n+2)e^-$$

$$CO + O^{2-} \rightarrow CO_2 + 2e^-$$

n désignant le nombre d'atomes de carbone de l'hydrocarbure.

Pour supporter de telles températures, les électrodes (cathode et anode) de ce type de pile sont constituées à base de matériaux céramique poreux séparées par un électrolyte dense, par exemple en zircone stabilisée par de l'oxyde d'yttrium (symbolisée par l'abréviation YSZ).

La cathode est généralement à base d'un manganite de lanthane dopé alors que l'anode est classiquement à base d'un cermet (à savoir un composite céramique-métal). A l'heure actuelle, le cermet utilisé pour constituer l'anode est un cermet comprenant du nickel dispersé dans une matrice de céramique YSZ DE 10026941 décrit une anode à base d'un cermet comprenant un élément métallique conducteur électronique dispersé dans une matrice en céramique oxyde qui correspond à la formule $A_1 B_m \dot{} X_n^7 X_o^8 X_p^9 X_q^{10} X_r^{11} X_s^{12} O_t$ dans laquelle A,B = élément choisi dans les groupes principaux 1,2 et/ou 5 et/ou dans les groupes secondaires 4, 5, 6, 7, 8, de la table périodique des éléments.

Les piles SOFC sont alimentées généralement par du gaz naturel, qui comporte majoritairement des hydrocarbures (tels que du méthane) et des traces de sulfure. Pour être utilisable, ce gaz naturel doit, de préférence, être converti en partie en $H_2$, lequel constitue un meilleur combustible pour la pile que les hydrocarbures. Pour cela, le gaz naturel doit subir une étape de reformage, qui consiste à transformer ledit gaz en une fraction majoritaire d'hydrogène et en une fraction minoritaire de monoxyde de carbone.

Cette étape de reformage peut se faire in situ, c'est-à-dire directement sur l'anode. En effet, en raison des hautes températures et du contact avec la vapeur d'eau (produit de la réaction électrochimique à l'anode) lors du fonctionnement des piles SOFC, le gaz subit, dans le compartiment anodique, une étape de reformage qui le transforme en hydrogène et en monoxyde de carbone, lesquels réagissent à l'anode pour produire de l'eau et du dioxyde de carbone.

Lesdites réactions de reformage sont les suivantes :

$$C_nH_{(2n+2)} + nH_2O \rightarrow (2n+1)H_2 + nCO$$

$$CH_4 + CO_2 \rightarrow 2CO + 2H_2$$

$$C_nH_{(2n+2)} + CO_2 \rightarrow (n+1)CO_2 + (n+1)\ H_2$$

$$CO + H_2O \rightarrow H_2 + CO_2$$

n désignant le nombre d'atomes de carbone de l'hydrocarbure.

Des études antérieures ont mis en évidence que les cermets du type défini ci-dessus (à savoir une association de Ni avec du YSZ) présentaient une sensibilité au gaz naturel non traité très importante, laquelle se traduit lors d'un reformage in situ par un dépôt de carbone conséquent qui peut être à l'origine de fissurations au sein de ce cermet.

De plus, il a été montré que ces cermets sont très sensibles au soufre, pouvant être présent dans le gaz naturel, lequel soufre empoisonne l'anode même à des concentrations très faibles (par exemple, de l'ordre de quelques dizaines de ppm).

Pour contourner ces inconvénients, la solution peut consister à utiliser comme combustible du gaz naturel très fortement humidifié (rapport eau/carbone de l'ordre de 2) ou ayant subi une étape de pré-reformage (à savoir une étape de reformage se situant à l'extérieur du compartiment anodique, à l'issue de laquelle le gaz composé majoritairement d'hydrogène est injecté dans ledit compartiment). Toutefois, ce traitement préalable du gaz naturel génère une consommation d'énergie supplémentaire, par rapport au cas où le gaz naturel est reformé in situ par utilisation de la chaleur interne de la pile. Cette consommation supplémentaire d'énergie occasionne ainsi une baisse globale du rendement.

Il peut être également opportun d'utiliser un compartiment de désulfurisation en amont du dispositif de pile, ce qui contribue à rendre le dispositif plus complexe et lourd en maintenance.

Il existe donc un véritable besoin pour un nouveau type d'anode à base d'un matériau qui soit insensible aux composés soufrés et avec lequel peut être utilisé du gaz naturel non traité, sans qu'un dépôt de carbone ne vienne diminuer la durée d'utilisation dudit matériau.

## EXPOSÉ DE L'INVENTION

Le but de l'invention est donc de proposer une anode de pile à oxyde solide, qui soit à base d'un matériau qui réponde au besoin mentionné ci-dessus.

Ce but est atteint par une anode de pile à oxyde solide à base d'un matériau composite comprenant une matrice en céramique oxyde comprenant du baryum, du titane et de l'indium, dans laquelle est dispersé un élément métallique conducteur électronique.

En d'autres termes, l'anode de l'invention est à base d'un cermet, c'est-à-dire d'un matériau composite céramique-métal, dans lequel la céramique est une céramique oxyde comprenant du baryum, du titane et de l'indium.

Les auteurs ont mis en évidence qu'un tel matériau pour constituer une anode de pile SOFC n'est pas sujet, lors d'une exposition en cours de fonctionnement à du gaz naturel non traité, aux dépôts de carbone et à l'empoisonnement au soufre tels que les matériaux classiquement utilisés pour constituer les anodes de pile SOFC. Le matériau constitutif de l'anode objet de l'invention permet ainsi :

- d'utiliser du gaz naturel non traité (à savoir du gaz n'ayant subi aucun traitement spécifique tel qu'une désulfurisation, un pré-reformage, une humidification) ;
- de s'affranchir de l'étape de pré-reformage, en l'absence de laquelle les anodes de l'art antérieur se dégradait au cours du temps du fait d'un dépôt de carbone ;
- de mettre en oeuvre l'étape de reformage et oxydation électrochimique directe au sein du compartiment anodique sans risque de dépôt de carbone ;
- de s'affranchir de la présence d'un désulfurisateur et de l'étape d'humification.

Comme il est mentionné précédemment, l'anode conforme à l'invention comporte un élément métallique conducteur électronique dispersé dans une matrice en céramique oxyde comprenant du baryum, du titane et de l'indium.

Par élément métallique conducteur électronique, on entend un métal au degré d'oxydation 0 apte à assurer la conduction d'électrons.

De préférence, l'élément métallique conducteur électronique est un élément appartenant au groupe des métaux de transition.

On précise que par métal de transition, on entend un métal ayant une sous-couche d incomplètement remplie à l'état d'atome neutre ou dans l'un de leurs états d'oxydation usuel. Ces éléments se répartissent en trois séries de transition :

- la première série de transition allant du scandium au zinc ;
- la deuxième série de transition allant de l'yttrium au cadmium ;
- la troisième série de transition allant du hafnium au mercure.

En particulier, de tels éléments peuvent être choisis parmi Ru, W, Rh, Ir, Ni, Cu, Pt, Fe, Mo, Pd, avec de préférence Ni.

Outre leur capacité à assurer la conduction d'électrons, les éléments métalliques susmentionnés constituent des catalyseurs de reformage et d'oxydation électrochimique directe, c'est-à-dire des espèces qui vont catalyser la réaction d'oxydation électrochimique du combustible en eau et dioxyde de carbone et aussi de transformation du gaz naturel majoritairement en hydrogène.

Les éléments métalliques susmentionnés sont incorporés sous forme d'inclusions dans une céramique oxyde comprenant du baryum, du titane et de l'indium.

Des céramiques conformes à la définition du paragraphe ci-dessus et particulièrement avantageuses sont des céramiques répondant à la formule suivante :

$$BaIn_{(1-x)}Ti_xO_{2,5 +(x/2)}$$

avec $0,6 \leq x < 1$.

Une céramique conforme à la présente invention et à la formule donnée ci-dessus peut être celle pour laquelle x est égal à 0,7, auquel cas la céramique répond à la formule :

$$BaIn_{0,3}Ti_{0,7}O_{2,85}$$

Il est entendu que la proportion d'élément métallique conducteur électronique doit être suffisante pour assurer une percolation électronique tout en maintenant la percolation ionique dans l'électrode (c'est-à-dire pour que l'électrode soit conductrice d'électrons et d'ions).

De préférence, l'élément conducteur électronique est présent en une teneur allant de 15 à 55% du poids du cermet fini.

L'anode de l'invention peut être préparée par tous procédés de préparation de cermet connus de l'homme du métier.

En particulier, elle peut être préparée par un procédé comprenant successivement les étapes suivantes :

a) une étape de mélange intime d'une poudre d'un oxyde de l'élément métallique conducteur électronique et d'une poudre de la céramique oxyde telle que définie précédemment ;
b) une étape de compactage du mélange obtenue à l'issue de l'étape a) ;
c) une étape de chauffage sous air à une température allant de 700°C à 1400°C ;
d) une étape de chauffage sous atmosphère réductrice à une température allant de 500°C à 1000°C.

Ainsi, la première étape (étape a)) consiste à mélanger intimement une poudre d'un oxyde de l'élément métallique conducteur électronique et d'une poudre de la céramique oxyde telle que définie précédemment, de manière à obtenir à l'issue de cette étape la poudre d'oxyde d'élément métallique conducteur électronique uniformément répartie dans le mélange. Cette étape de mélange peut se faire soit manuellement en mélangeant lesdites poudres dans un mortier, soit mécaniquement à l'aide, par exemple, d'un mélangeur, tel qu'un mélangeur à boulets.

On précise que la poudre d'oxyde d'élément conducteur électronique peut être une poudre de RuO, WO$_3$, Rh$_2$O$_3$, IrO$_2$, NiO, CuO, PtO$_2$, Fe$_2$O$_3$, MoO$_3$, PdO avec de préférence NiO.

On précise que la poudre de céramique oxyde répond à la formule suivante :

$$BaIn_{(1-x)}Ti_xO_{2,5 +(x/2)}$$

avec $0,6 \leq x < 1$.

De préférence, la poudre d'oxyde d'élément conducteur de l'électricité est présente en une teneur de 20 à 60 % en poids du poids du mélange.

Une fois le mélange obtenu, celui-ci est compacté, c'est-à-dire que le mélange de poudres est pressé pour être mis sous forme par exemple de pastilles ou de barreaux. Cette étape de compactage s'effectue avantageusement à l'aide d'une presse uniaxiale sous une pression allant de 4 à 6 kbars.

La poudre compactée obtenue est ensuite soumise à une étape de chauffage sous air à une température allant de 700 à 1400°C, de préférence pendant une durée de 12 heures à 72 heures, de manière à obtenir une consolidation de celle-ci puis à une étape de chauffage sous atmosphère réductrice à une température de 500°C à 1000°C, de préférence pendant une durée allant de 5 heures à 48 heures, de manière à obtenir une réduction de l'oxyde d'élément métallique conducteur électronique en l'élément métallique conducteur électronique. On précise que l'atmosphère réductrice est de préférence une atmosphère d'hydrogène ou encore du gaz naturel.

A l'issue de cette étape, le produit obtenu est une anode constituée d'un cermet comprenant une matrice en céramique oxyde comprenant du baryum, du titane et de l'indium dans laquelle est dispersé un élément métallique conducteur électronique.

En ce qui concerne la céramique oxyde pouvant répondre à la formule $BaIn_{(1-x)}Ti_xO_{2,5\ +(x/2)}$, elle peut être préparée préalablement par un procédé sol-gel ou par voie céramique classique.

La préparation d'une céramique oxyde de formule $BaIn_{(1-x)}Ti_xO_{2,5\ +(x/2)}$ par voie céramique classique s'effectue, avantageusement, à l'aide de carbonate de baryum $BaCO_3$, d'oxyde de titane $TiO_2$ et d'oxyde d'indium $In_2O_3$ sous forme de poudres, lesdites poudres étant pesées dans les quantités requises pour obtenir la composition voulue. Les réactifs susmentionnés, mélangés intimement généralement avec de l'acétone, sont placés dans un creuset en platine et sont soumis à un chauffage sous air à un température de l'ordre de 1200°C pendant une durée pouvant aller jusqu'à 24 heures. Le produit obtenu est ensuite broyé à l'aide d'un mortier et compacté sous forme de pastilles à l'aide d'une presse uniaxiale sous une pression pouvant aller jusqu'à 5 kbars. Les pastilles peuvent ensuite être soumises à un recuit sous air à une température de l'ordre de 1350°C pendant 24 heures suivi d'un refroidissement naturel à l'intérieur du four.

La préparation d'une céramique oxyde de formule $BaIn_{(1-x)}Ti_xO_{2,5\ +(x/2)}$ par voie sol-gel s'effectue avantageusement à l'aide de précurseurs de Ba, d'In et de Ti, tels que le carbonate de baryum $BaCO_3$, l'acétate d'indium $In(CH_3COO)_3$ et l'oxo-bis-acétylacétonate de titane $TiO(CH_3COCHCOCH_3)_2$ sous forme de poudres, lesdits précurseurs étant pesés dans les quantités requises pour l'obtention de la composition voulue. Les précurseurs sont généralement dissous dans de l'eau distillée. On mélange ensuite à la solution résultante un acide, telle que l'acide citrique, en une proportion telle que le nombre de moles d'acide citrique soit égal au produit des charges des ions métalliques par leur coefficient stoechiométrique. Un gel est obtenu après avoir porté la solution précédemment obtenue, éventuellement additionnée d'un faible volume d'acide acrylique et quelques centaines de milligrammes de N, N'-méthylène bis-acrylamide. Le gel est ensuite soumis à une décomposition partielle, par exemple, à l'aide d'un four à micro-ondes pendant 80 minutes à 500 W. La poudre obtenue à l'issue de cette décomposition est broyée dans un mortier et soumis à un traitement thermique, comprenant un chauffage à 750°C pendant 6 heures et un recuit à 1200°C pendant 24 heures.

L'invention a également pour objet une pile à oxyde solide (ou pile SOFC) comprenant une anode telle que décrite précédemment.

Une telle pile comprend classiquement au moins une cellule comprenant :

- une cathode ;
- une anode telle que définie précédemment ;
- une membrane conductrice d'ions $O^{2-}$ disposée entre ladite cathode et ladite anode.

Il est entendu que ladite pile comprend des moyens d'alimentation de l'anode en gaz naturel et des moyens d'alimentation de la cathode en oxygène ou air.

Une pile à oxyde solide comprenant une anode conforme à l'invention présente les avantages suivants :

- du fait que l'anode peut être le siège d'un reformage interne ou d'une oxydation électrochimique directe du gaz naturel sans ajout d'eau et ceci sans être dégradé par un dépôt de carbone, la pile la contenant est avantageusement dépourvue d'un dispositif de pré-reformage et est donc de conception plus simple et est moins volumineuse que les piles de l'art antérieur comprenant un tel dispositif ;
- du fait que l'anode de l'invention est à base d'un matériau peu sensible au soufre généralement contenu dans le gaz naturel, la pile la contenant est ainsi avantageusement dépourvue d'un dispositif de désulfurisation, ce qui rend cette pile plus simple de conception et moins volumineuse que les piles de l'art antérieur.

L'invention va maintenant être décrite en référence à l'exemple suivant et aux figures annexées.

**BRÈVE DESCRIPTION DES DESSINS**

La figure 1 représente un cliché obtenu par un microscope électronique à balayage d'un cermet Ni-$BaIn_{(1-x)}Ti_xO_{(2,5\ +x/2)}$ (avec x=0,7) après avoir été soumis pendant 12 heures à un courant de gaz naturel à 700°C.

La figure 2 représente un spectre issu d'une analyse réalisée par dispersion d'énergie des photons X du cermet représenté sur la figure 1.

La figure 3 représente un diagramme de diffraction des rayons X sur poudre ($\lambda Cu_{K\alpha}$=1,5406 A) obtenu pour le cermet Ni-$BaIn_{0,3}Ti_{0,7}O_{2,85}$ après 12 heures sous courant de gaz naturel à 700°C (graphe a) et pour le composé $BaIn_{0,3}Ti_{0,7}O_{2,85}$ sans traitement (graphe b).

La figure 4 représente un cliché issu d'un microscope électronique à balayage d'un cermet Ni-YSZ après avoir été soumis pendant 12 heures à un courant de gaz naturel à 700°C.

La figure 5 représente un spectre issu d'une analyse réalisée par dispersion d'énergie des photons X du cermet représenté sur la figure 4.

**EXPOSÉ DÉTAILLÉ DE MODES DE RÉALISATION PARTICULIERS**

EXEMPLE.

Cet exemple illustre la préparation d'un cermet, utilisé en tant que matériau d'anode conformément à l'invention. Cette étape de préparation comprend dans un premier temps une étape de préparation d'une céramique oxyde de formule $BaIn_{0,3}Ti_{0,7}O_{2,85}$.

a)Préparation de la céramique oxyde de formule $BaIn_{0,3}Ti_{0,7}O_{2,85}$.

6,692 g de carbonate de baryum $BaCO_3$, 1,896 g d'oxyde de titane $TiO_2$ et 1,412 g d'oxyde d'indium $In_2O_3$ sont introduits dans un mortier et sont mélangés avec de l'acétone de manière à obtenir un mélange de poudres homogène. Le mélange ainsi obtenu est placé dans un creuset en platine et soumis à un chauffage sous air à 1200°C pendant 24 heures. Le produit obtenu est ensuite broyé à l'aide d'un mortier et compacté sous forme de pastilles à l'aide d'une presse uniaxiale sous 5 kbars. Les pastilles obtenues sont ensuite placées dans un four à l'air à 1350°C pendant 24 heures.

b)Préparation du cermet Ni- $BaIn_{0,3}Ti_{0,7}O_{2,85}$.

60 mg de NiO et 140 mg de $BaIn_{0,3}Ti_{0,7}O_{2,85}$ précédemment préparé sont introduits dans un mortier et sont mélangés intimement de manière à obtenir un mélange de poudres homogène. Le mélange ainsi obtenu est soumis à un compactage sous forme de pastille à l'aide d'une presse uniaxiale sous 5 kbars. La pastille obtenue est ensuite placée dans un four à l'air à 1000°C pendant 12 heures puis sous hydrogène à 750°C pendant 12 heures (pour permettre la réduction de NiO en Ni).

c)Etude du comportement du matériau vis-à-vis d'un courant de gaz naturel sous chauffage.

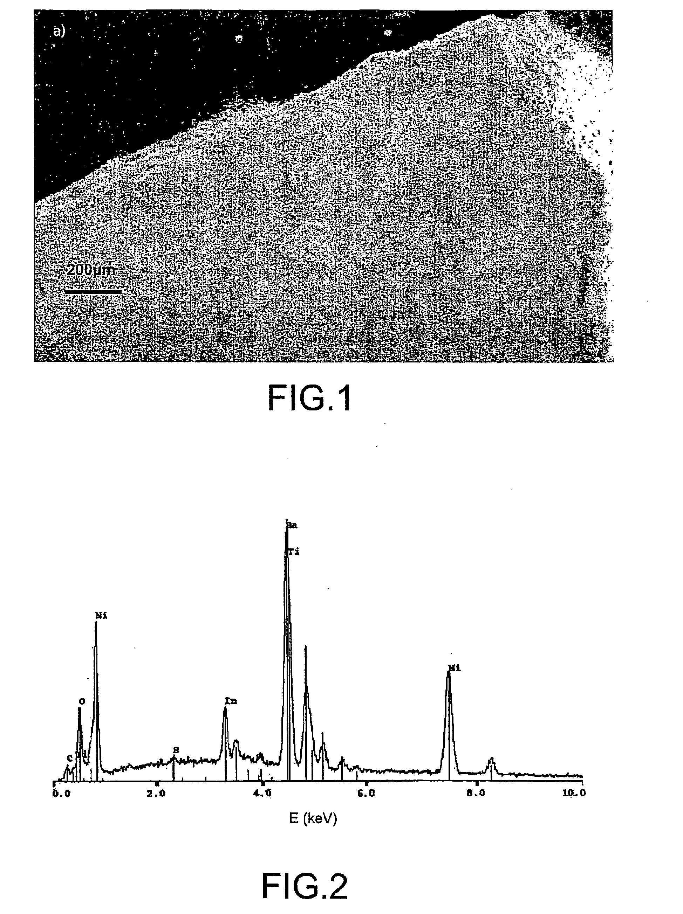

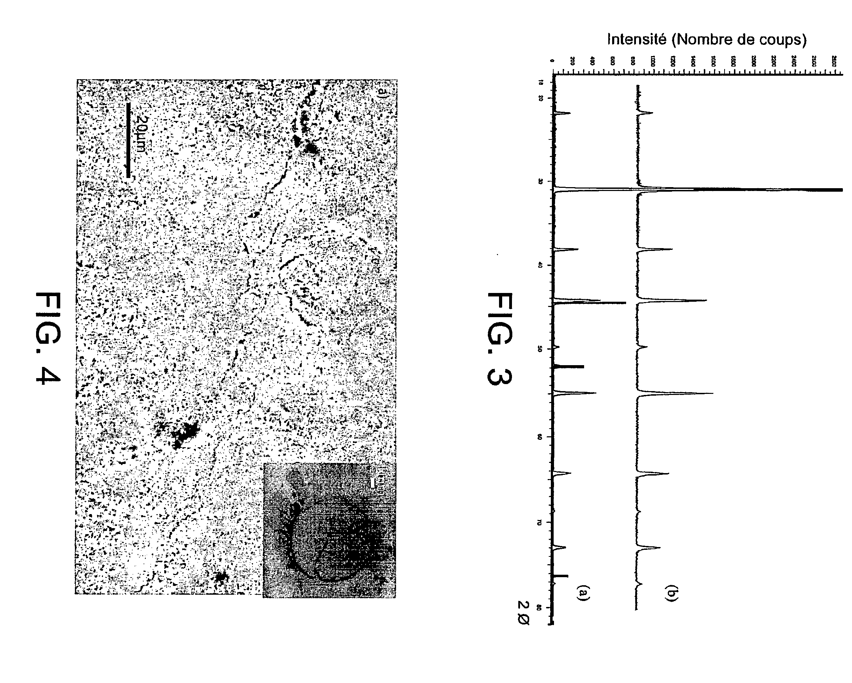

Le cermet réalisé ci-dessus est soumis à un courant de gaz naturel à 700°C pendant 12 heures.
A l'issue de ce traitement, un cliché du cermet est pris à l'aide d'un microscope électronique à balayage (figure 1). Ce cliché ne montre aucune fracture de la surface du cermet, et donc aucune altération du matériau suite à ce traitement. Ceci est confirmé notamment par la figure 2, qui indique une présence infinitésimale de carbone (moins de 1% molaire). La figure 3 confirme cette observation, en représentant un diagramme de diffraction des rayons X représentant :

- un graphe a pour le cermet $Ni-BaIn_{0,3}Ti_{0,7}O_{2,85}$ après 12 heures sous courant de gaz naturel à 700°C ;
- un graphe b pour le composé $BaIn_{0,3}Ti_{0,7}O_{2,85}$ sans traitement (graphe b).

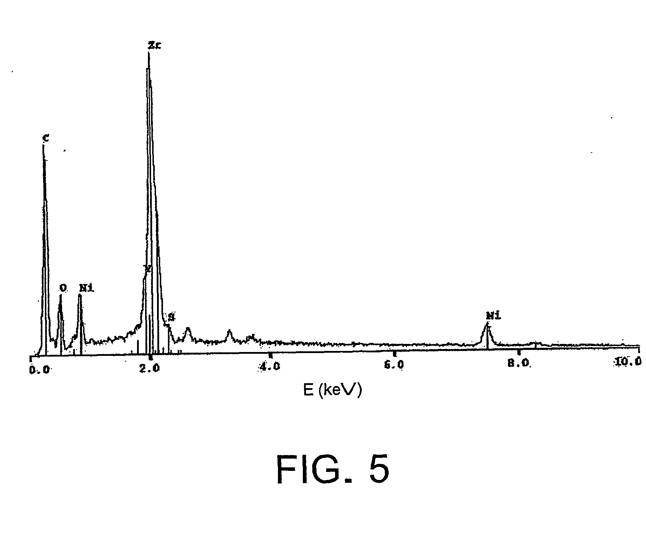

La seule différence entre ces deux graphes réside dans la présence d'un pic correspondant à celui du Ni métallique pour le graphe a, ce qui montre que le cermet suite au chauffage sous atmosphère de gaz naturel n'a pas subi de dégradation, les autres pics se superposant totalement.
A titre comparatif, le cermet Ni-YSZ classiquement utilisé pour constituer des anodes a été soumis au même traitement, à savoir à un courant de gaz naturel à 700°C pendant 12 heures.
La figure 4 illustre un cliché de ce cermet pris au microscope électronique à balayage.
Ce cliché montre la présence de fractures à la surface du cermet, dues à un dépôt de carbone (points noirs sur le cliché), lequel dépôt de carbone est confirmé par la figure 5, qui illustre la présence de carbone en grande quantité (presque 50% molaire).

**Revendications**

1.  Anode de pile à oxyde solide à base d'un matériau composite comprenant une matrice en céramique oxyde comprenant du baryum, du titane et de l'indium dans laquelle est dispersé un élément métallique conducteur électronique.

2.  Anode selon la revendication 1, dans laquelle l'élément métallique conducteur électronique est un élément appartenant au groupe des métaux de transition.

**3.** Anode selon la revendication 2, dans laquelle l'élément métallique est choisi parmi Ru, W, Rh, Ir, Ni, Cu, Pt, Fe, Mo, Pd.

**4.** Anode selon la revendication 2 ou 3, dans laquelle l'élément métallique est le nickel.

**5.** Anode selon l'une quelconque des revendications 1 à 4, dans laquelle la céramique oxyde répond à la formule suivante :

$$BaIn_{(1-x)}Ti_xO_{2,5 +(x/2)}$$

avec $0,6 \leq x < 1$.

**6.** Anode selon la revendication 5, dans laquelle x est égal à 0,7.

**7.** Pile à combustible à oxyde solide comprenant une anode selon l'une quelconque des revendications 1 à 6.

**Claims**

**1.** Solid oxide cell anode based on a composite material comprising a ceramic oxide matrix comprising barium, titanium and indium, in which matrix an electronically conductive metal element is dispersed.

**2.** Anode according to claim 1, wherein the electronically conductive metal element is an element belonging to the group of transition metals.

**3.** Anode according to claim 2, wherein the metal element is selected from Ru, W, Rh, Ir, Ni, Cu, Pt, Fe, Mo, Pd.

**4.** Anode according to either claim 2 or claim 3, wherein the metal element is nickel.

**5.** Anode according to any one of claims 1 to 4, wherein the ceramic oxide is of the following formula:

$$BaIn_{(1-x)}Ti_xO_{2.5 + (x/2)}$$

where $0.6 \leq x < 1$.

**6.** Anode according to claim 5, wherein x is equal to 0.7.

**7.** Solid oxide fuel cell comprising an anode according to any one of claims 1 to 6.

**Patentansprüche**

**1.** Anode für Festoxid-Brennstoffzelle auf der Grundlage eines Verbundwerkstoffs, die eine Matrix aus Oxidkeramik aufweist, die Barium, Titan und Indium enthält, in der ein elektronisch leitendes metallisches Element dispergiert ist.

**2.** Anode nach Anspruch 1, bei der das elektronisch leitende metallische Element ein Element ist, das zu der Gruppe der Übergangsmetalle gehört.

**3.** Anode nach Anspruch 2, bei der das metallische Element aus Ru, W, Rh, Ir, Ni, Cu, Pt, Fe, Mo, Pd ausgewählt wird.

**4.** Anode nach Anspruch 2 oder 3, bei der das metallische Element das Nickel ist.

**5.** Anode nach einem der Ansprüche 1 bis 4, bei der die Oxidkeramik der folgenden Formel entspricht

$$BaIn_{(1-x)}Ti_xO_{2,5+(x/2)},$$

wobei $0,6 \leq x < 1$.

**6.** Anode nach einem der Ansprüche 5, bei der x gleich 0,7 ist.

**7.** Festoxid-Brennstofizelle, die eine Anode nach einem der Ansprüche 1 bis 6 aufweist.

FIG.1

FIG.2

FIG. 3

FIG. 4

FIG. 5

**EP 1 714 338 B1**

## RÉFÉRENCES CITÉES DANS LA DESCRIPTION

**Documents brevets cités dans la description**

*   DE 10026941